Europäisches Patentamt

European Patent Office

Office européen des brevets

(11) Publication number: **0 386 302**
**A2**

# (12) EUROPEAN PATENT APPLICATION

(21) Application number: **89107135.9**

(22) Date of filing: **20.04.89**

(51) Int. Cl.⁵: **A22C 25/16**

(30) Priority: **06.03.89 JP 54678/88**

(43) Date of publication of application:
**12.09.90 Bulletin 90/37**

(84) Designated Contracting States:
**ES**

(71) Applicant: **NIPPON FILLESTAR CO., LTD.**
**1-1, Midorigaoka 2-chome**
**Daito-shi Osaka(JP)**

(72) Inventor: **Ogawa, Yutaka**
**12-8, Nakatsuko**
**Ibaraki-shi, Osaka(JP)**

(74) Representative: **Patentanwälte Beetz sen. -**
**Beetz jun. Timpe - Siegfried -**
**Schmitt-Fumian- Mayr**
**Steinsdorfstrasse 10**
**D-8000 München 22(DE)**

(54) **Fish filleting apparatus.**

(57) There is disclosed a fish filleting apparatus which is intended to obtain a pair of fillets from a piece of decapitated fish which is fed while separating the fillets from the remaining part of the fish, where the decapitated fish which has been fed is conveyed while being held on both sides by conveyor belts, cut by four rotary disk knives, arranged in the conveying path on both sides of the backbone of the decapitated fish, from the dorsal fin side and from the pelvic fin side, with the parts of the fillets near the backbone left uncut are severed by a pair of fixed knives provided at mutually opposite sides of the rotary disk knives of each pair and arranged at positions near the position of most proximity of the rotary disk knives of each pair, thereby two fillets and a remainder are obtained from a piece of decapitated fish.

EP 0 386 302 A2

# FISH FILLETING APPARATUS

## BACKGROUND OF THE INVENTION

### 1. Field of the Invention

The present invention relates to an apparatus to fillet fish such as flatfish, for instance.

### 2. Description of Prior Art

Fish which have been caught and landed are subject to various processes such as decapitation, spawn extraction, removal of bowels, opening of the fish body and filleting. To produce fillets from the fish, filleting process is performed.

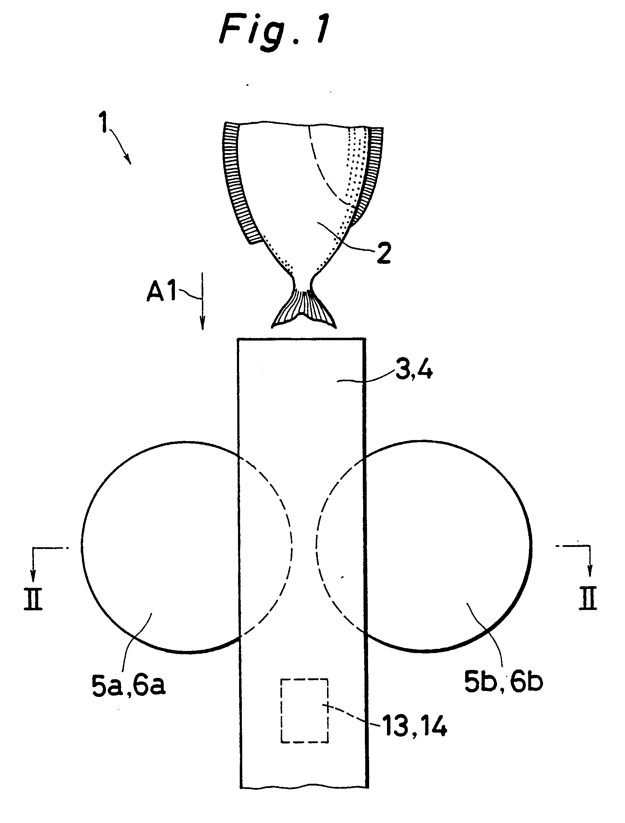

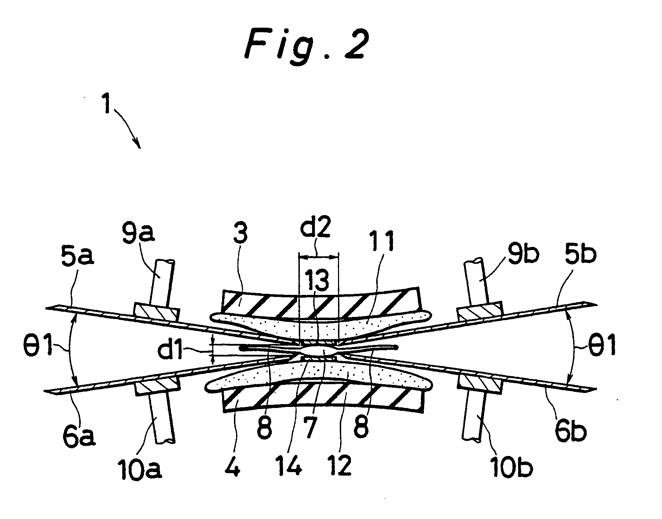

Fig.1 is a front view explanatory of the basic constitution of a filleting apparatus which is an example representative of the prior art. Fig.2 is a cross sectional view of the apparatus shown in Fig.1 in a cutting section II-II. The prior art is explained in the following referring to these figures.

Landed and decapitated fish F is fed to the filleting apparatus 1 tail forward in the direction indicated by an arrow A1. Such decapitated fish 2 is introduced to four rotary disk knives 5a, 5b; 6a, 6b while being held between a pair of conveyor belts 3 and 4 from both sides. These rotating disk knives 5a, 5b; 6a, 6b are outwardly inclined by an angle $\theta1$ and arranged so that the inner ends thereof are separated by distance d1. The rotary disk knives 5a, 5b; 6a, 6b are arranged at intervals d2. The distance d1 is determined so that it is slightly greater than the vertebral appendages 8 of the decapitated fish, and the distance d2 is determined so that it is slightly greater than the backbone 7. The rotary disk knives 5a, 5b; 6a, 6b are rotatably driven by rotary shafts 9a, gb; 10a, 10b.

The decapitated fish 2 is conveyed by conveyor belts 3 and 4 while being cut by the rotary disk knives 5a, 5b; 6a, 6b from the dorsal side and belly side on both sides of the backbone 7 to perform filleting.

The distance d2 provided between the rotary disk knives 5a, 5b; 6a, 6b is for the purpose of preventing the rotary disk knives 5a, 5b, 6a, 6b from scraping the backbone 7 and causing the part of the backbone 7 which has been scraped off to adhere to the fillets 11 and 12 which have been produced. However, because of the distance d2, the rotary disk knives 5a, 5b; 6a, 6b cannot cut the decapitated fish 2 in a section facing the backbone 7. Therefore, separating members 13 and 14 of a plate shape are arranged at the downstream with regards to the rotary disk knives 5a, 5b, 6a, 6b in the transfer direction A1, thereby the fillets 11 and 12 being forcibly severed from the backbone 7 by means of the separating members 13 and 14.

In such prior art as aforementioned, there has been many chances of the fillets 11 and 12 being damaged and losing the product value during severing of the fillets 11 and 12 from the backbone 7.

## SUMMARY OF THE INVENTION

The object of the invention is to solve the aforementioned problem of the prior art and provide a fish filleting apparatus which is capable of greatly improve the quality of the fillets obtained by filleting of fish.

According to the invention, this object is achieved by providing a fish filleting apparatus comprising;

a conveyor means which transfers decapitated fish tail forward by holding the fish on both sides along the cross direction both to the back-belly direction and to the longitudinal direction of the fish.

two pairs of rotary disk knives arranged in the transfer path of the decapitated fish by the conveyor means, separated from each other by spaces through which the backbones of the decapitated fish being conveyed path, which cut the conveyed decapitated fish from the dorsal side and from the belly side near to the backbone, and

a pair of fixed knives which is arranged, at downstream with regard to the position where the rotary disk knives of each pair are nearest to each other along the direction of decapitated fish transfer, and near the position where the rotary disk knives of each pair are nearest to each other on opposite sides of each pair of rotary disk knives respectively, each of which being shaped corresponding to the opposite surfaces of the rotary disk knives of each pair.

In accordance to the invention, decapitated fish is conveyed by the conveyor means tail forward while being held on both sides along the direction of longitudinal axis. Two pairs of rotary disk knives are provided in the path of conveying the decapitated fish with the conveyor means, which cut the conveyed decapitated fish from the dorsal side and from the belly side near to the backbone on both sides of the backbone. While the decapitated fish being conveyed is cut from the dorsal side and from the belly side near to the backbone on both sides of the backbone by the two pairs of rotary disk knives, the rotary disk knives of each pair have a gap of the back bone to pass between each other, so that the two pairs of rotary disk knives cut the fish leaving a part corresponding to the backbone.

The decapitated fish which has been cut is conveyed further downstream by the conveyor means. a pair of fixed knives which is arranged at downstream, with regard to the position where the rotary disk knives of each pair are nearest to each other, along the direction of decapitated fish transfer, and arranged near the position where the rotary disk knives of each pair are nearest to each other on opposite sides of each pair of rotary disk knives respectively. The fixed knives have shapes corresponding to the opposite surfaces of the rotary disk knives of each pair. Therefore, the decapitated fish leaving the part near the backbone is cut off at the part corresponding to the backbone by the fixed knives after passing through the position through which the backbone passes, namely where the rotary disk knives of each pair are nearest to each other.

In this process, the situation where the fillets obtained by filleting are damaged by being severed forcibly from the backbone can be avoided. Moreover, the fixed knives have shapes which correspond to the opposite surfaces of the rotary disk knives, so that the yield of the fillet products can be improved.

In accordance to the invention as will be obvious from the foregoing explanation, the decapitated fish leaving the part near the backbone is cut off at the part corresponding to the backbone by the fixed knives after passing through the position through which the backbone passes, namely where the rotary disk knives of each pair are nearest to each other. Thus damage to the fillets obtained by filleting caused by severing forcibly from the backbone can be avoided. Moreover, the fixed knives have shapes which correspond to the opposite surfaces of the rotary disk knives, so that the yield of the fillet products can be improved.

In a preferred embodiment, the conveyor means comprises a pair of conveyor belts which are arranged opposing to each other and each stretched across a pair of pulleys and multiplicity of pressurization rollers which pressurizes the mutually opposing parts of each conveyor belt in the nearing direction and are arranged at such intervals to each other that each conveyor belt holds the decapitated fish.

Also in the preferred embodiment, the two pairs of the rotary disk knives are arranged with each pair placed on each side of the longitudinal axis of the decapitated fish passing through the conveyance path and the constituting rotary disk knives of each pair have a space between each other through which the backbone passes.

Also in the preferred embodiment, the pair of fixed knives are bent into shapes which correspond to the shapes of the rotary disk knives of each pair to which each fixed knife faces.

Also in the preferred embodiment, the edges of the pair of fixed knives are formed in such shapes that incline from the upstream to the downstream of the decapitated fish conveying direction as proceeding from one side to the other side of the rotary disk knife.

Also in the preferred embodiment, a guiding means is provided which separates the fillets obtained by filleting the decapitated fish from the remaining part of the decapitated fish and guides the fillets, downstream along the conveyance direction with regards to the conveyor means.

Also in the preferable embodiment, a delivery region is provided downstream along the conveyance direction with regards to the guiding means to deliver the obtained fillets to the outside of the machine of which direction of travel is selected to be parallel to the thickness direction of the fillets.

Also in the preferable embodiment, a guiding means is provided upstream along the conveyance direction with regards to the conveyor means to guide the fish which have been feed to the conveyor means.

## BRIEF DESCRIPTION OF THE FIGURES

Those aforementioned and other objects, features and advantages of the invention will be more apparent from the following detailed description and the accompanying figures.

Fig.1 is a front view showing the constitution of the filleting apparatus 1 representative of the prior art.

Fig.2 is a cross sectional view of the apparatus shown in Fig.1 in a cutting section II-II.

Fig.3 is a front view of the filleting apparatus 21 of an embodiment of the invention.

Fig.4 is a plane view of the filleting apparatus 21.

Fig.5 is a side elevational view of the filleting apparatus 21 showing the right side.

Fig.6 is a front view of the filleting apparatus 21 explanatory of the basic constitution of the filleting apparatus 21.

Fig.7 is Fig.6 is a side elevational view of the filleting apparatus 21 explanatory of the basic constitution of the filleting apparatus 21.

Fig.8 is an enlarged front view near the fixed knives 69, 70.

Fig.9 is an enlarged left side view near the fixed knives 69, 70.

Fig.10 is a cross section taken along line X-X of Fig.8.

Fig.11 is a plan view of a severing device 78.

Fig.12 is an oblique view of the severing device 78.

## DETAILED DESCRIPTION OF THE PREFERRED EMBODIMENT

Referring to the accompanying figure, a preferred embodiment of the invention is described in detail in the following.

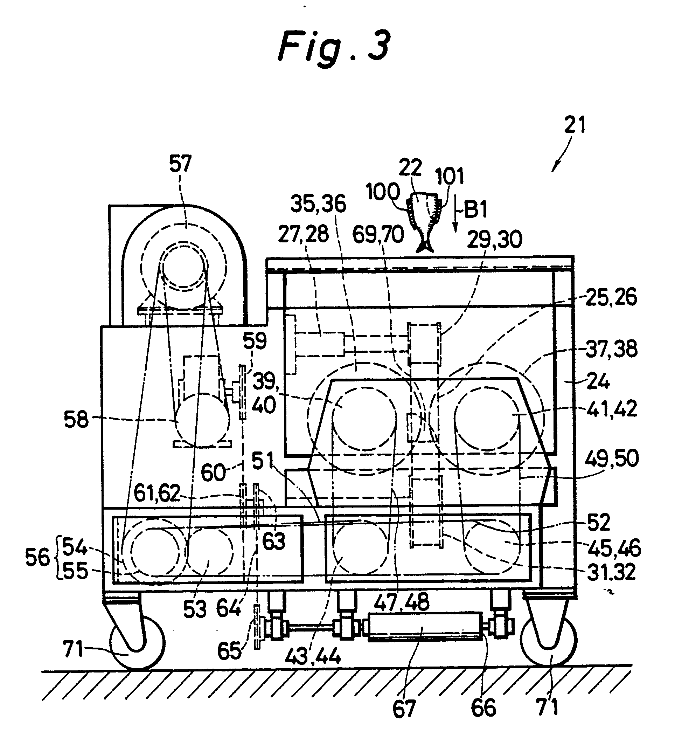

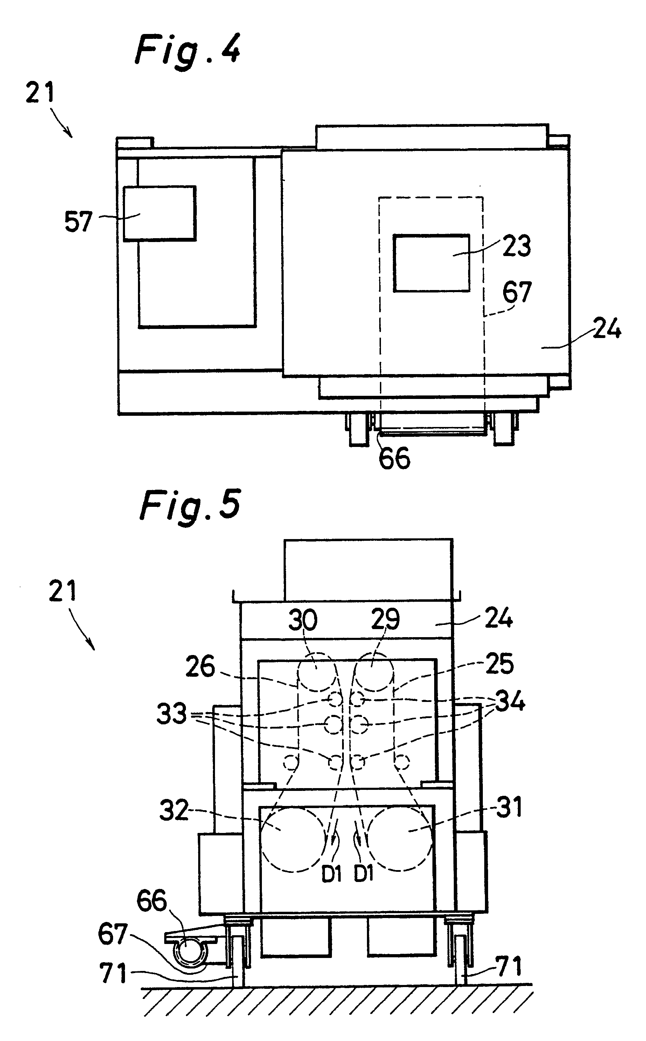

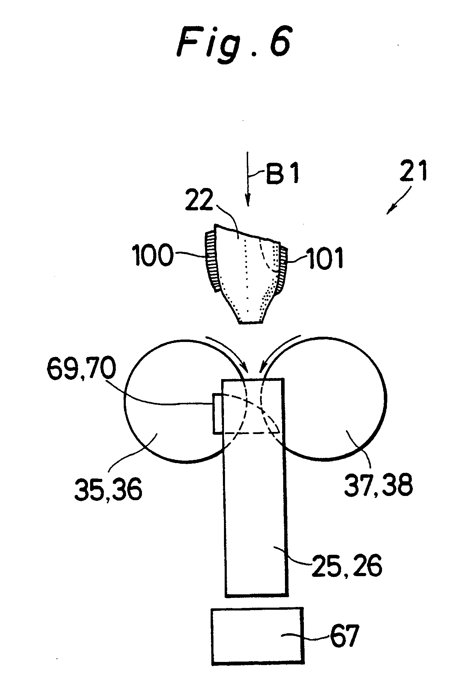

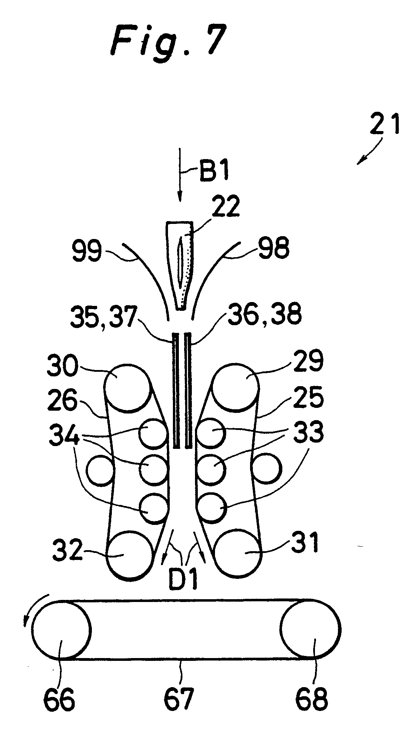

Fig.3 is a front view of the filleting apparatus 21 of an embodiment of the invention, Fig.4 is a plane view of the filleting apparatus 21, Fig.5 is a right side view of the apparatus in Fig.3, Fig.6 is a front view explanatory of the inner structure of the filleting apparatus 21 and Fig.7 is a side view of the filleting apparatus 21 explanatory of the basic constitution of the filleting apparatus 21. Referring to these figures, the filleting apparatus is explained. The filleting apparatus 21 is provided with a housing 24 where a charging port 23 is formed on the top through which decapitated fish 22 such as flatfish is charged.

In the housing 24 below the charging port 23, guiding means 98 and 99 as shown in Fig.7 are provided and further below a pair of conveyor belts 25 and 26 which is a conveyor means are arranged to be opposed to each other as shown in Fig.5. The highest positions of the endless conveyor belts 25 and 26 are wound around pulleys 29 and 30 which have mutually parallel axes and are mounted on tips of supporting shafts 27 and 28 which are fixed on the housing 24. The lowest positions of the conveyor belts 25 and 26 are wound around pulleys 31 and 32 to which driving force is transmitted as described later.

Between the pulleys 29, 30; 31, 32 of the conveyor belts 25 and 26, multiplicity of pressurization rollers 33 and 34 are provided which pressurizes elastically the conveyor belts 25 and 26 in mutually nearing direction and are arranged at such intervals that the decapitated fish 22 is held on both sides by the conveyor belts 25 and 26.

Four rotary disk knives (called the rotary knives hereafter) 35, 36, 37 and 38 are arranged as described later between the conveyor belts 25 and 26 near the pressurization rollers 33 and 34. The rotary knives 35 and 37 and the rotary knives 36 and 38 respectively constitute pairs of rotary disk knives. Each of the rotary knives 35 through 38 is provided with pulleys 39, 40, 41 and 42 which are fixed coaxially, below which drive pulleys 43, 44, 45 and 46 are arranged while drive belts 47, 48, 49 and 50 are stretched between respective pairs of pulleys. The drive pulleys 43, 44; 45, 46 are applied with driving power from a drive pulley 53 via the drive belt 51 and 52. The drive pulley 53 is supplied with driving power from a motor 57 via, for example, a speed-up mechanism 56 comprising a pair of a large and a small pulleys 54 and 55.

The driving power of the motor 57 is fed to a rotating direction converter 58 which converts the rotating direction of the rotary shaft from the direction perpendicular to the plane of paper in Fig.3 to the direction in the plane of the paper in Fig.3, then the revolution around the rotary axis in the plane of paper in Fig.3 is transmitted via a pulley 59, drive belt 60 and pulleys 61 and 62 to the pulleys 31 and 32 which are fixed on the pulleys 61 and 62 coaxially.

The pulleys 61 and 62 are fitted with a pulley 63 fixed coaxially, and a roller 66 is driven to rotate via the pulley 63, a drive belt 64 and a pulley 65. On the back side of paper in Fig.3 with regard to the pulley 66, namely at the right in Fig.5, is provided a roller 68 on which a conveyor belt 67 which moves through a region below the transfer belts 25 and 26. Thus as is explained later, fillets obtained by filleting decapitated fish 22 by rotary knives 35 ~ 38 are let to fall below the conveyor belts 25 and 26 to be delivered to the outside by the conveyor belt 67 thereafter.

A pair of fixed knives 69 and 70 of constitution described later is provided directly below the downstream of the rotary knives 35 ~ 38 in the direction B1 of conveying the decapitated fish 22, while below the housing 24 is provided four, for example, of wheels 71 to facilitate the movement the filleting apparatus 21.

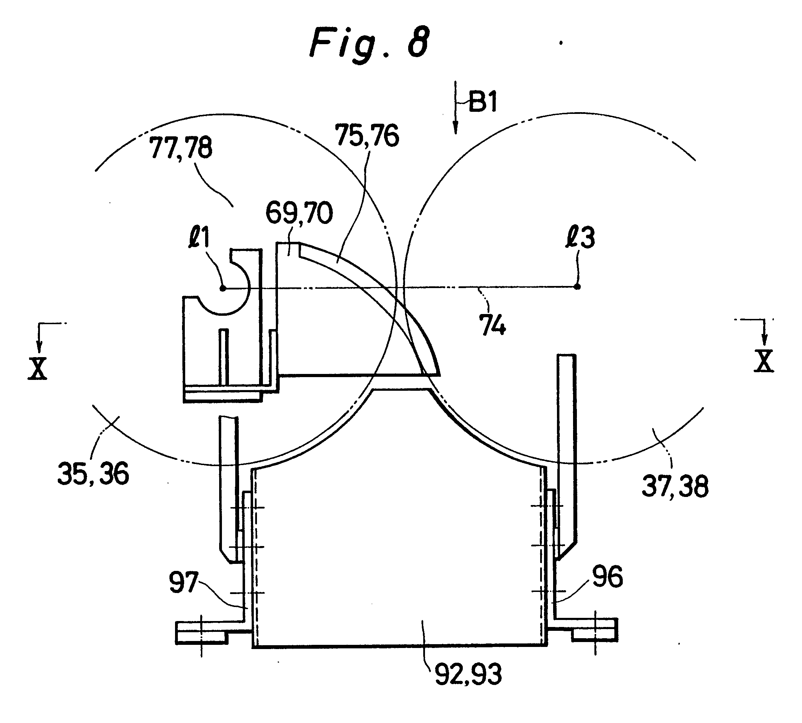

Fig.8 is an enlarged plane view of a section around the fixed knives 69 and 70.

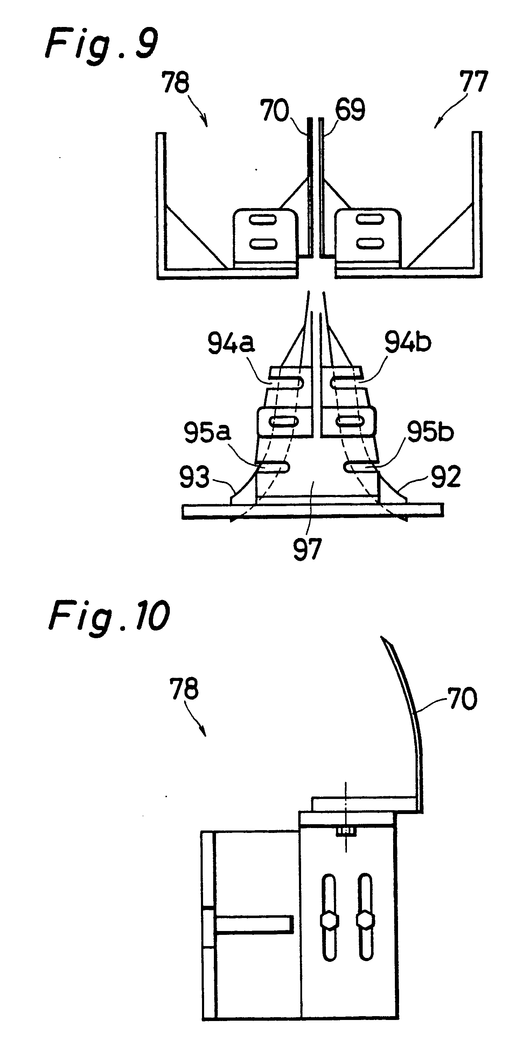

Fig.9 is a left side view of the constitution in Fig.8.

Fig.10 is a cross sectional view taken through cutting line X-X in Fig.8.

Referring to these drawings, constitution near the fixed knives 69 and 70 is described in detail in the following. Rotary knives 35 ~ 38 have axes of rotation ($\ell 1$, $\ell 2$, $\ell 3$ and $\ell 4$ of the pulleys 39 ~ 42 shown in Fig.1, and the axes of rotation $\ell 1$, $\ell 2$, $\ell 3$ and $\ell 4$ are arranged in a same virtual horizontal plane 74.

The axes of rotation $\ell 1$, $\ell 2$, $\ell 3$ and $\ell 4$ are arranged to be inclined outwardly by an angle $\theta 2$ from each other so that the rotary knives 35, 36; 37, 38 are open outwardly as shown in Fig.10. While the rotary knives 35, 37; 36, 48 are arranged separated by a space D1 from each other, the space D1 is determined to be slightly larger than the outer diameter of the backbone 70 in the back-belly direction of the decapitated fish 22. While the rotary knives 35, 36; 37, 38 are installed to be separated by a space D2 from each other, the space D2 is determined to be slightly larger than the thickness of the vertebral appendant bone 73 of the decapitated fish 22.

As shown in Fig.8, periphery of the rotary knives 35 -38 which cross the virtual horizontal plane 74 defined by the axes of rotation $l1 \sim l4$ are at most proximity to each other having the space D1. Positions of arranging the severing mechanisms 77 and 78 including the fixed knives 69 and 70 are selected so that edges 75 and 76 are located slightly beneath such parts of the most proximity as mentioned above and opposite to the rotary knives 35, 37; 36, 38. Shapes of the fixed knives 69 and 70 are formed as shown in Fig.10 by bending into shapes which correspond to the mutually opposite surfaces of the rotary knives 35, 37; 36, 38.

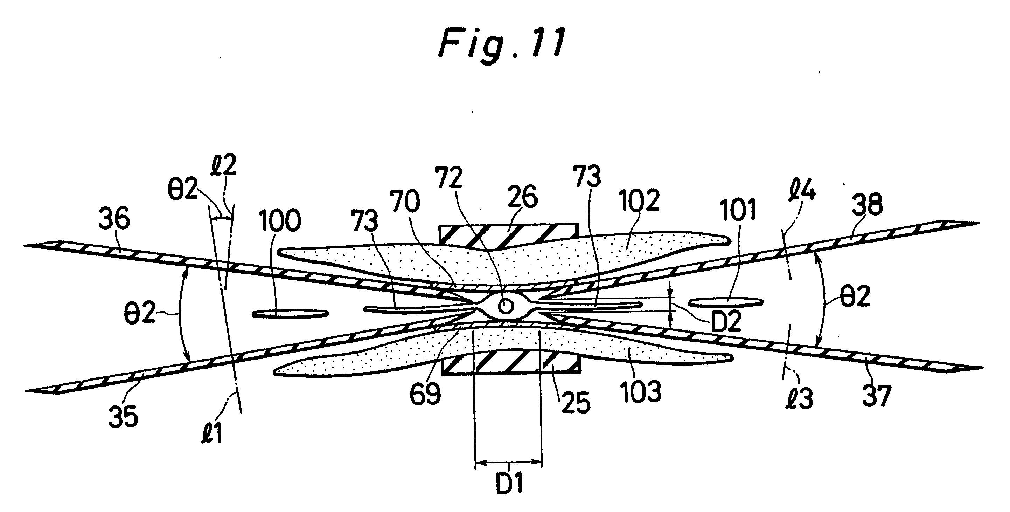

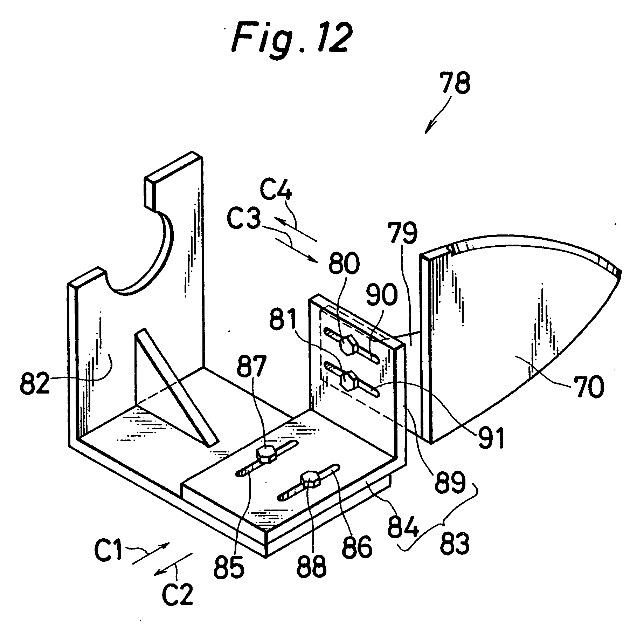

Fig.11 is a plane view of the severing mechanism 78 and Fig.12 is an oblique view of the severing mechanism 78. Referring to these drawings, the severing mechanism 78 is described in the following. While the following description relates to the severing mechanism 78, the severing mechanism 77 has a constitution symmetric to this and therefore explanation thereof is omitted. The fixed knife 70 of the severing mechanism 78 may be, for example, a piece made by dividing the rotary knife 35 into several pieces. At the base of the fixed knife 70 is fixed a mounting plate 79 by welding, for example, to the fixed knife in such a condition as to extend vertically.

Near an end of the mounting plate 79 opposite to the fixed knife 70 is formed a threaded hole (not shown in figure) to which clamp bolts 80 and 81 shown in Fig.12 are screwed in. To fix the fixed knife 70 to the housing 24 or the like, a frame 82 formed into L shape, for example, is used. A pair of threaded holes (not shown in figure) is formed at an end of the frame 82 in the direction of its extension, and the 1st adjustment section 84 of a plate-like adjustment member 83 formed in L shape extends vertically in the direction where the frame 82 extends, while elongated holes 85 and 86 are formed along this extending direction separated with a space, through which the clamp bolts 87 and 88 are screwed, thereby the frame 82 and the adjustment member 83 being fixed.

2nd adjustment section 89 of the adjustment member 83 is also provided with elongated holes 90 and 91 thereon, and the mounting plate 79 is fixed on the 2nd adjustment section 89 by the clamp bolts 80 and 81 via the elongated holes 90 and 91.

The severing mechanism 78 which has such a constitution as described above is capable of loosening the clamp bolts 87 and 88 to move the adjustment member 83 in the direction of an arrow C1 or in the direction of an arrow C2, and of loosening the clamp bolts 80 and 81 to move the mounting plate 79 with respect to the adjustment member 83 in the direction of an arrow C3 or in the direction of an arrow C4, thereby adjusting the positional relationship of the fixed knife 70 to the rotary knives 36 and 38. Then the filleting apparatus 21 can be driven by clamping the clamp bolts 80, 81, 87 and 88.

Referring to Fig.8 and Fig.9 again, below these rotary knives 35 ~ 38, guiding chutes 92 and 93 which guide the fillets 102 and 103 obtained by the filleting apparatus 21 to the conveyor belt 67 are installed on a pair of mounting members 96 and 97 which has elongated holes 94a, 94b, 95a and 95b by means of bolts or the like. Therefore the amount of downward opening of the guide chutes 92 and 93 can be adjusted.

The operation of the apparatus of the embodiment is explained in the following. When decapitated fish 22 such as flatfish is charged through the charging port 23, the decapitated fish 22 is guided by the guide members 98 and 99 to be held by the conveyor belts 25 and 26. The conveyor belts 25 and 26 are driven in the direction of an arrow D1 to convey the decapitated fish 22 in the direction of the arrow D1. The decapitated fish 22 is cut from the dorsal fin 100 side along the vertebral appendages 73 on both side to near the backbone 72 by the rotary knives 35 and 36, and at the same time cut from the pelvic fin 101 side along the vertebral appendages 73 on both side to near the backbone 72 by the rotary knives 37 and 38. This process is shown in Fig.10.

On the other hand, a space D1 to pass the backbone 72 is provided between the rotary knives 35, 37; 36, 38. Therefore the fillets 102 and 103 which have been obtained are in such a condition as connected to the backbone 72 at this stage. The decapitated fish under this condition is further conveyed in the direction of an arrow B1 by the conveyor belt 25 and 26. Then the decapitated fish 22 severed by the fixed knives 69 and 70 at the outside of the rotary knives 35, 37; 36, 38 to separate the fillets 102 and 103 from the backbone 72 at both upper and lower sides of the backbone 72 in Fig. 10.

The fillets 102 and 103 obtained are guided by the guide chutes 92 and 93 to fall onto the conveyor belts 67 to be thereby delivered to the outside. On the other hand, the backbone 72, the vertebral appendages 73 connecting thereto, dorsal fin 100 and pelvic fin 101 fall through the guide chutes 92 and 93 onto a receiving container to be thereby discharge to the outside.

As described above, the filleting apparatus 21 of this embodiment performs quick filleting process on decapitated fish 22 which is charged from above to enable to obtain fillets 102 and 103 and simultaneously to sever the fillets 102 and 103 and 103 from the backbone 72 by means of the fixed knives 69 and 70. By this constitution, damage to the fillets 102 and 103 described in the paragraph of the prior art is prevented and the quality of the fillets 102 and 103 which have been obtained can be greatly improved.

The fixed knives 69 and 70 have such shapes as correspond to the shapes of the opposite surfaces of the rotary knives 35, 37; 36, 38 and are located as near as possible to the rotary knives 35, 37; 36, 38. By this configuration, such as situation as part of the fillets 102 and 103 remain on the backbone resulting in low yield is prevented. The shapes and the positions of arrangement of the fixed knives 69 and 70 and the example of constitution of the severing mechanism 77 and 78 not restricted to the embodiment.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A fish filleting apparatus comprising:
conveyor means which convey tail forward the center of the backbone of decapitated fish by holding it from both sides in the direction the longitudinal direction.
two pairs of rotary disk knives provided in the path of conveying the decapitated fish by means of the conveyor means, having spaces between each other through which the backbone of the decapitated fish being conveyed passes, which cut the decapitated fish being conveyed from the dorsal side and the belly side to near the backbone and
a pair of fixed knives which is arranged, with regard to the position where the rotary disk knives of each pair are nearest to each other, downstream along the direction of decapitated fish fish transfer near the position where the rotary disk knives of each pair are nearest to each other on opposite sides of each pair of rotary disk knives respectively, each of which being shaped corresponding to the opposite surfaces of the rotary disk knives of each pair.

2. A fish filleting apparatus according to claim 1, including :
a pair of conveyor belts arranged mutually opposed and, stretched across a pair of pulleys and multiplicity of pressurization rollers which pressurize the mutually opposed parts of each conveyor belt in mutually nearing direction and are arranged with such intervals as each conveyor belt holds the decapitated fish from both sides.

3. A fish filleting apparatus according to claim 1, wherein the two pairs of rotary disk knives are arranged, with respect to the backbone of the decapitated fish passing the conveying path, each pair located on each side along the longitudinal axis direction, rotary disk knives of each pair having a space through which the backbone passes.

4. A fish filleting apparatus according to claim 1, wherein the pair of fixed knives is formed by bending into a shape corresponding to the shape of the rotary disk knives of each pair to which each fixed knife faces.

5. A fish filleting apparatus according to claim 1, wherein the edges of the pair of fixed knives are formed in such shape as to incline from upstream to downstream if the decapitated fish conveying direction as proceeding from one side to the other side of the rotary disk knife.

6. A fish filleting apparatus according to claim 1, including a guiding means which guides the fillets obtained by filleting the decapitated fish separately from the remaining part of the decapitated fish provided downstream in the conveying direction with respect to the conveyor means.

7. A fish filleting apparatus according to claim 6, including a conveyor belt which conveys the obtained fillets to the outside of the machine with the travelling direction selected to be along the thickness direction of the fillet, provided downstream in the conveying direction with respect to the guiding means.

8. A fish filleting apparatus according to claim 1, including a guiding means which guides decapitated fish, which has been fed, to the conveyor means provided upstream in the conveying direction with respect to the conveyor means.

# Fig. 1

# Fig. 2

# Fig. 3

*Fig.4*

21

57

23

67

24

66

*Fig.5*

21

30    29    24

26    25

33    34

32    31

D1  D1

66

67

71    71

# Fig. 6

# Fig. 7

Fig. 8

*Fig.9*

*Fig.10*

Fig. 11

# Fig.12